# EUROPEAN PATENT SPECIFICATION

(11) **EP 2 764 742 B1**
(45) Date of publication and mention of the grant of the patent: **28.10.2015**
(21) Application number: 12766185.8
(22) Date of filing: 29.08.2012
(51) Int. Cl.: H04W 56/00

(54) **METHODS, USER EQUIPMENT AND EVOLVED NODE B FOR INACTIVATING UPLINK TRANSMISSIONS**
VERFAHREN, BENUTZERVORRICHTUNG UND E-NODE B ZUR INAKTIVIERUNG VON UPLINK-ÜBERTRAGUNGEN
PROCÉDÉS, ÉQUIPEMENT UTILISATEUR ET NOEUD B ÉVOLUÉ POUR INACTIVER DES TRANSMISSIONS EN LIAISON MONTANTE

(30) Priority: 07.10.2011 US 201161544381 P
(43) Date of publication of application: 13.08.2014
(73) Proprietor: Telefonaktiebolaget L M Ericsson (publ), 164 83 Stockholm (SE)
(72) Inventor: BERGSTRÖM, Mattias, S-120 71 Stockholm (SE); WITTBERG, Mikael, S-753 19 Uppsala (SE)
(74) Representative: Ericsson
(86) International application number: PCT/SE2012/050918
(87) International publication number: WO 2013/051989

(56) References cited:
- WO-A1-2011/060836
- NOKIA SIEMENS NETWORKS ET AL: "Stop TAT Command MAC Control Element", 3GPP DRAFT; 36321_CR0NNN-(REL-9)_R2-092836 ON STOP TAT MAC CE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050340544, [retrieved on 2009-04-28]
- NTT DOCOMO ET AL: "RRC_CONNECTED DRX and dedicated UL resource release", 3GPP DRAFT; R2-081157, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20080205, 5 February 2008 (2008-02-05), XP050138935, [retrieved on 2008-02-05]

## Description

### TECHNICAL FIELD

The technology relates to radio communications, and in particular, to inactivating uplink transmissions.

### BACKGROUND

In mobile communication systems, various issues occur when there are multiple active user equipments (UEs) in the same cell of a radio base station such as an evolved Node B (eNB).

For example, in order to preserve the orthogonality in UL (UpLink), the UL transmissions from multiple UEs can be time aligned at the eNB. Since UEs may be located at different distances from the eNB, the UEs will need to initiate their UL transmissions at different times. A UE far from the eNB needs to start transmission earlier than a UE close to the eNB. This can for example be handled by time advance of the UL transmissions, whereby a UE starts its UL transmission before a nominal time given by the timing of the DL signal received by the UE. Timing advance (TA) commands with TA values can be sent from the eNB to manage the timing alignment. The UE keeps a TA timer which controls the validity of the TA value and as long as the TA timer is running the TA value is considered valid and the UE is considered UL synchronised on the serving cells associated with the TA value. The TA timers will be restarted upon reception of a TA command which updates the TA value. If no TA command is received for a certain time the TA timer will expire, after which UL resources are released for the cell in question.

One way to use the TA commands is by the eNB intentionally avoiding sending TA commands, so that the TA timer will eventually expire, whereby UL transmission will stop. However, The TA timer value ranges from 0.5 s to infinity and it might therefore take too long time until the TA timer expires in order to release UL resources on the serving cell.

It is known from document "Stop TAT Command MAC Control Element", R2-092836, 3GPP TSG-RAN Meeting #66,4th-8th May 2009, to send, by the eNB, a MAC Control Element to the UE in order to stop the periodic uplink transmissions.

### SUMMARY

It is an object to provide a way to quickly inactivating uplink transmissions.

According to a first aspect, it is presented a method, performed in a user equipment, UE, for inactivating uplink transmissions to an indicated cell. The method comprises the steps of: receiving a grouping command comprising the indicated cell from an evolved Node B, eNB, to assign the indicated cell to an inactive timing advance, TA, group, the inactive TA group indicating the UE to refrain from performing uplink transmissions; disassociating the indicated cell from a normal TA group, the normal TA group being associated with a TA value; and refraining from uplink transmission to the indicated cell. By disassociating the indicated cell from the normal TA group and not assigning the indicated cell to another normal TA group, uplink transmissions on the indicated cell are effectively and quickly stopped.

In the step of disassociating, the TA value may indicate when the UE should start uplink transmission before a nominal time given by the timing of a download signal received by the UE.

The method may further comprise the step of assigning the indicated cell to the inactive TA group. In other words, the UE follows the grouping command, and since the inactive TA group is inactive, uplink transmissions will stop.

In the step of assigning the indicated cell to the inactive TA group, the inactive TA group may be part of a set of predetermined inactive TA groups. In other words, there is a set of (one or more) inactive TA groups which is known to both the UE and the eNB, which can be used in this way to inactivate uplink transmissions.

In the step of assigning the indicated cell to the inactive TA group, the inactive TA group may fail to have a valid TA value. By not having a valid TA value, the TA is invalid, whereby the TA group is determined to be inactive.

In the step of assigning the indicated cell to the inactive TA group, the inactive TA group may fail to have an active TA timer. By not having an active TA timer, the TA is invalid, whereby the TA group is determined to be inactive.

The method may further comprise letting the indicated cell remain disassociated with any TA group. As long as the indicated cell is not associated with a normal TA group, uplink transmissions will be prevented. Hence, one way to implement this method is to allow the indicated cell to remain not associated with any TA group.

The method may further comprise the steps of: receiving a grouping command comprising the indicated cell from the eNB, to assign the indicated cell to a normal TA group having a valid TA value; and assigning the indicated cell to the normal TA group. This is a way to reactivate uplink transmissions to the indicated cell from the UE.

According to a second aspect, it is presented a user equipment for inactivating uplink transmissions comprising: a data processor; and a memory. The memory stores program instructions that, when executed, causes the UE to: receive a grouping command comprising the indicated cell from an evolved Node B, eNB, to assign the indicated cell to an inactive timing advance, TA, group, the inactive TA group being predefined to indicate refraining from performing uplink transmissions; disassociate the indicated cell from a normal TA group, the normal TA group being associated with a TA value; and refrain from uplink transmission to the indicated cell.

The TA value indicates when the UE should start uplink transmission before a nominal time given by the timing of a download signal received by the UE.

The user equipment may further comprise program instructions to assign the indicated cell to the inactive TA group.

The inactive TA group may be part of a set of predetermined inactive TA groups.

The inactive TA group may fail to have a valid TA value.

The inactive TA group may fail to have an active TA timer.

The user equipment may further comprise program instructions to let the indicated cell remain disassociated with any TA group.

The user equipment may further comprise program instructions to: receive a grouping command comprising the indicated cell from the eNB, to assign the indicated cell to a normal TA group having a valid TA value; and assign the indicated cell to the normal TA group.

According to a third aspect, it is presented a method, performed in an evolved Node B, eNB, for inactivating uplink transmissions to an indicated cell, the method comprising the steps of: obtaining an identity of an inactive timing advance, TA, group, the inactive TA group indicating to a user equipment, UE, to refrain from performing uplink transmissions; and sending a grouping command comprising the indicated cell to the UE, to assign the indicated cell to the inactive TA group.

The step of obtaining the identity of the inactive TA group may comprise obtaining the identity of a TA group being part of a predefined set of inactive TA groups.

The step of obtaining the identity of the inactive TA group may comprise obtaining the identity of a TA group for which an associated TA timer currently is inactive.

The method may further comprise the step of: sending a grouping command comprising the indicated cell to the UE, to assign the indicated cell to a normal TA group having a valid TA value.

According to a fourth aspect, it is presented an evolved Node B, eNB, comprising: a data processor; and a memory. The memory stores program instructions that, when executed, causes the evolved Node B to: obtain an identity of an inactive timing advance, TA, group, the inactive TA group indicating to a user equipment, UE, to refrain from performing uplink transmissions; and send a grouping command comprising the indicated cell to the UE, to assign the indicated cell to the inactive TA group.

The program instructions to obtain the identity of the inactive TA group may comprise program instructions to obtain the identity of a TA group being part of a predefined set of inactive TA groups.

The program instructions to obtain the identity of the inactive TA group may comprise program instructions to obtain the identity of a TA group for which an associated TA timer currently is inactive.

The evolved Node B may further comprise program instructions to: send a grouping command comprising the indicated cell to the UE, to assign the indicated cell to a normal TA group having a valid TA value.

It is to be noted that any feature of the first, second, third and fourth aspects may, when appropriate, be applied to any other of these aspects.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic diagram illustrating the physical resources for LTE (Long Term Evolution) downlink;
Fig 2 is a schematic diagram illustrating LTE time-domain structure;
Fig 3 is a schematic diagram illustrating a downlink subframe;
Fig 4 is a schematic diagram illustrating carrier aggregation;
Fig 5 is a schematic diagram illustrating a cell with different distances between an eNB and UEs (User Equipments);
Fig 6 is a schematic timing graph illustrating timing advance of uplink transmissions depending on distance between UEs and the eNB;
Fig 7 is a schematic diagram illustrating random access preamble transmission;
Fig 8 is a sequence diagram illustrating signalling over the air interface for a contention based random access procedure in LTE;
Fig 9 is a schematic diagram illustrating contention based random access;
Fig 10 is a sequence diagram illustrating signalling over the air interface for a contention free random access procedure in LTE;
Figs 11A-B are flow charts illustrating methods performed in a UE for inactivating uplink transmissions to an indicated cell;
Figs 12A-B are flow charts illustrating methods performed in an eNB for inactivating uplink transmissions to an indicated cell;
Fig 13 is a sequence diagram illustrating signalling between an eNB and a UE for inactivating uplink transmissions to an indicated cell;
Fig 14 is a flow chart illustrating inactivating uplink transmissions to an indicated cell;
Fig 15 is a block diagram of some of the components of a network node such as the eNB of Figs 5, 9 and 13; and
Fig 16 is a block diagram of some of the components of the UE of Figs 5, 8, 9, 10, and 13.

### DETAILED DESCRIPTION

The following description sets forth specific details, such as particular embodiments for purposes of explanation and not limitation. But it will be appreciated by one skilled in the art that other embodiments may be employed apart from these specific details. In some instances, detailed descriptions of well known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialised function, ASICs (application specific integrated circuits), PLAs (Programmable Logic Array), etc.) and/or using software programs and data in conjunction with one or more digital microprocessors or general purpose computers. Nodes that communicate using the air interface also have suitable radio communications circuitry. Moreover, the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analog) circuitry including but not limited to ASICs and/or field programmable gate array(s) (FPGA(s)), and (where appropriate) state machines capable of performing such functions.

In terms of computer implementation, a computer is generally understood to comprise one or more processors or one or more controllers, and the terms computer, processor, and controller maybe employed interchangeably. When provided by a computer, processor, or controller, the functions may be provided by a single dedicated computer or processor or controller, by a single shared computer or processor or controller, or by a plurality of individual computers or processors or controllers, some of which maybe shared or distributed. Moreover, the term "processor" or "controller" also refers to other hardware capable of performing such functions and/or executing software, such as the example hardware recited above.

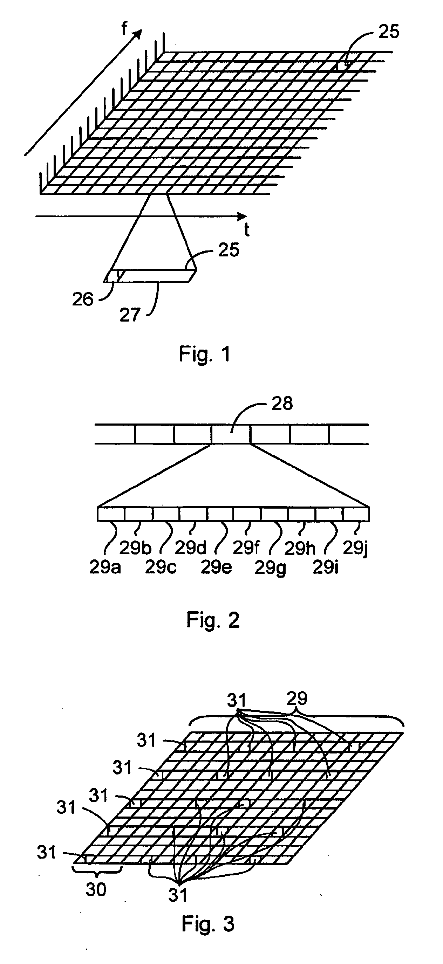

Here now one example of an environment in which embodiments can be employed will be explained with reference to Figs 1-4. The presented example is based on LTE, but any existing or future mobile communication standard can be used, as long as the principles presented in the.embodiments are applicable.

Fig 1 is a schematic diagram illustrating the physical resources for LTE (Long Term Evolution) downlink. LTE uses OFDM (Orthogonal Frequency Division Multiplexing) in the downlink and DFT (Discrete Fourier Transform)-spread OFDM in the uplink. The basic LTE downlink physical resource can thus be seen as a time-frequency grid as illustrated in Fig 1, where each resource element 25 corresponds to one OFDM subcarrier during one OFDM symbol interval. Each resource element 25 comprises cyclic prefix section 26 and a main section 27.

Fig 2 is a schematic diagram illustrating LTE time-domain structure. In the time domain, LTE downlink transmissions are organised into radio frames 28 of 10 ms, each radio frame consisting of ten equally-sized subframes 29a-j of length Tsubframe = 1 ms, as can be seen in Fig 2.

Fig 3 is a schematic diagram illustrating a downlink subframe. The resource allocation in LTE is typically described in terms of resource blocks (RB), where a resource block corresponds to one slot (0.5 ms) in the time domain and 12 contiguous subcarriers in the frequency domain. A pair of two adjacent resource blocks in time direction (1.0 ms) is known as a resource block pair. Resource blocks are numbered in the frequency domain, starting with o from one end of the system bandwidth.

The notion of virtual resource blocks (VRB) and physical resource blocks (PRB) has been introduced in LTE. The actual resource allocation to a UE is made in terms of VRB pairs. There are two types of resource allocations, localized and distributed. In the localized resource allocation, a VRB pair is directly mapped to a PRB pair, hence two consecutive and localized VRB are also placed as consecutive PRBs in the frequency domain. On the other hand, the distributed VRBs are not mapped to consecutive PRBs in the frequency domain, thereby providing frequency diversity for data channel transmitted using these distributed VRBs.

Downlink transmissions are dynamically scheduled, i.e., in each subframe the base station transmits control information about to which terminals data is transmitted and upon which resource blocks the data is transmitted, in the current downlink subframe. This control signaling is typically transmitted in a control region 30 in the first one, two, three or four OFDM symbols in each subframe and the number n=1, 2, 3 or 4 is known as the Control Format Indicator (CFI), thus indicating the number of OFDC symbols being part of the control region 30. The downlink subframe also contains common reference symbols (CRS) 31, which are known to the receiver and used for coherent demodulation of, e.g., the control information. A downlink system with CFI=3 OFDM symbols as control for a subframe 29 is illustrated in Fig 3.

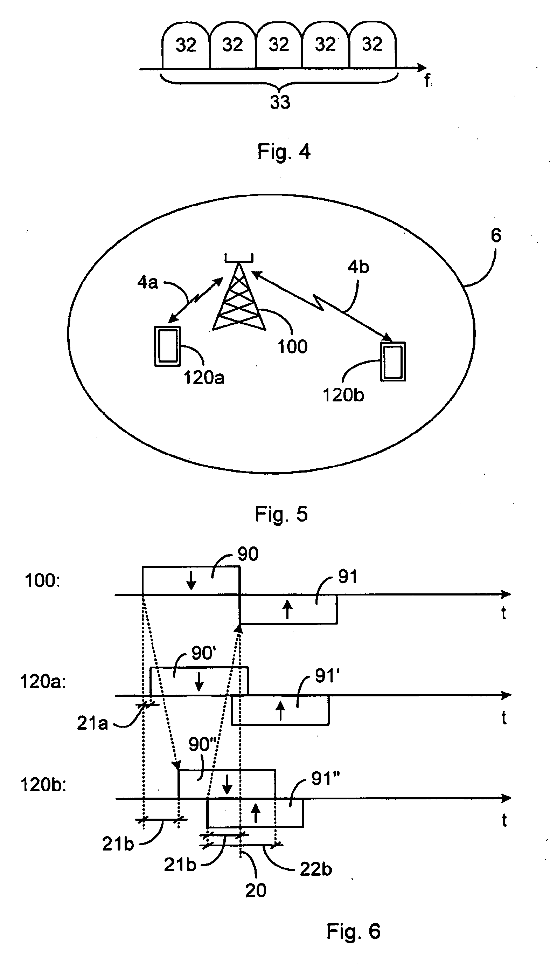

Fig 4 is a schematic diagram illustrating carrier aggregation. The LTE Rel-10 specifications have recently been standardized, supporting Component Carrier (CC) bandwidths up to 20 MHz (which is the maximal LTE Rel-8 carrier bandwidth). Hence, an LTE Rel-10 operation wider than 20 MHz is possible using Carrier Aggregation which appears as a number of LTE carriers to an LTE Rel-10 terminal.

In particular for early LTE Rel-10 deployments, it can be expected that there will be a smaller number of LTE Rel-10-capable terminals compared to many LTE legacy terminals. Therefore, it is necessary to assure an efficient use of a wide carrier also for legacy terminals, i.e. that it is possible to implement carriers where legacy terminals can be scheduled in all parts of the wideband LTE Rel-10 carrier. One way to obtain this is using Carrier Aggregation (CA). CA means that an LTE Rel-10 terminal can receive multiple CCs 32, where the CCs have, or at least the possibility to have, the same structure as a Rel-8 carrier. CA is illustrated in Fig 4.

The Rel-10 standard supports up to 5 aggregated component carriers 32 for an aggregated bandwidth 33, in this example of 100 MHz. Each component carrier 32 is limited in the RF specifications to have a one of six bandwidths, namely 6,15, 25, 50, 75, or 100 RB (corresponding to 1.4, 3, 5, 10, 15, and 20 MHz, respectively).

The number of aggregated CCs as well as the bandwidth of the individual CC may be different for uplink and downlink. A symmetric configuration refers to the case where the number of CCs in downlink and uplink is the same, whereas an asymmetric configuration refers to the case that the number of CCs is different. The number of CCs configured in the network maybe different from the number of CCs seen by a terminal. A terminal may for example support more downlink CCs than uplink CCs, even though the network offers the same number of uplink and downlink CCs.

CCs are also referred to as cells or serving cells. More specifically, in an LTE network, the component carriers aggregated by a terminal are denoted primary cell (PCell) and secondary cells (SCells). The term Serving Cell comprises both PCell and SCells. The PCell is terminal-specific and is "more central" in the sense that vital control signaling and other important signaling is typically handled via the PCell. The component carrier configured as the PCell is the primary CC, whereas all other component carriers are secondary CCs.

During initial access, a LTE Rel-10 terminal behaves similarly to a LTE Rel-8 terminal. Upon successful connection to the network a terminal may - depending on its own capabilities and the network - be configured with additional CCs in the UL and DL. Configuration is based on radio resource control (RRC). Due to often heavy RRC signaling and a relatively slow speed of RRC signaling, it is envisioned that a terminal maybe configured with multiple CCs, even though not all of them are currently used. A terminal activated on multiple CCs means it has to monitor all DL CCs for a Physical Downlink Control Channel (PDCCH) and a Physical Downlink Shared Channel (PDSCH). This requires a wider receiver bandwidth, higher sampling rates, etc. resulting in high power consumption.

Now the concept of time alignment will be explained. Fig 5 is a schematic diagram illustrating a cell with different distances between an eNB 100 and UEs 120a-b. It can be seen that both a first UE 120a and a second UE 120b are within a cell 6 of an eNB 100. The first UE 120a is connected to the eNB 100 via a first wireless link 4a and the second UE 120b is connected to the eNB 100 via a second wireless link 4b. The first UE 120a is located closer to the eNB 100 compared to the second UE 120b.

In order to preserve the orthogonality in uplink (UL), the UL transmissions from multiple UEs need to be time aligned at the eNB. Since UEs may be located at different distances from the eNB, as shown in Fig 5, the UEs will need to initiate their UL transmissions at different times. A UE far from the eNB needs to start transmission earlier than a UE close to the eNB. This can for example be handled by a timing advance of an UL transmission where a UE starts its UL transmission before a nominal time given by the timing of the DL signal received by the UE. This concept is illustrated in Fig 6.

Referring also to the elements shown in Fig 5, the eNB 100 uses a downlink time slot 90 and an uplink time slot 91 for communication with the UEs 120a-b in the cell 6 of the eNB 100.

Looking first from the perspective of the second UE 120b, due to the time it takes for signals to propagate to the second UE 120b, there is a time delay 21b until the second UE 120b starts its downlink time slot 90". In order for the uplink time slot 91" of the second UE 120b to be time aligned with the uplink time slot 91 of the eNB 100, the uplink time slot 91" of the second UE 120b has to start earlier than the time 20 when the uplink time slot 91 starts at the eNode B 100. The uplink transmission starts at an earlier time such that, after the time delay 21b for propagation, the uplink time slot 91 of the eNB 100 and the uplink time slot of the second UE 120b are aligned. The uplink time slot 91" of the second UE 120b starts at an amount of time 22b prior to when the downlink time slot 90" of the second UE 120b ends, i.e. timing advance (TA).

Analogously, the downlink time slot 90' and the uplink time slot 91' of the first UE 120a are shifted with a shorter amount of time 21a, corresponding to the shorter distance between the first UE 120a and the eNB 100.

The UL TA is maintained by the eNB through TA commands sent to the UE based on measurements on UL transmissions from that UE. Through timing advance commands, the UE is ordered to start its UL transmissions earlier or later, which depends on the location of the UE. This applies to all UL transmissions, except for random access preamble transmissions on PRACH (Physical Random Access Channel), i.e., including transmissions on PUSCH (Physical Uplink Shared Channel), PUCCH (Physical Uplink Control Channel), and SRS (Sounding Reference Signal).

There is a strict relation between DL transmissions and the corresponding UL transmission. Examples of this are (1) the timing between a DL-SCH transmission on PDSCH (Physical Downlink Shared Channel) to the HARQ (Hybrid Automatic Repeat Request) ACK/NACK feedback transmitted in UL (either on PUCCH or PUSCH), and (2) the timing between an UL grant transmission on PDCCH to the UL-SCH (Uplink Shared Channel) transmission on PUSCH.

By increasing the timing advance value for a UE, the UE processing time between the DL transmission and the corresponding UL transmission decreases. For this reason, an upper limit on the maximum timing advance (TA) has been defined by 3GPP in order to set a lower limit on the processing time available for a UE. For LTE, this value has been set to roughly 667us which corresponds to a cell range of 100km (note that the TA value compensates for the round trip delay, see time period 22b in Fig 6).

In LTE Rel-10, there is only a single timing advance value per UE, and all UL cells are assumed to have the same transmission timing. The reference point for the timing advance is the receive timing of the primary DL cell.

In LTE Rel-11, different UL serving cells used by the same UE may have different timing advances. A current assumption in 3GPP is that the serving cells sharing the same TA value (for example depending on the deployment) will be configured by the network to belong to a "TA group." It is further assumed that if at least one serving cell of the TA group is time-aligned, all serving cells belonging to the same group may use this TA value. To obtain time alignment for a secondary cell (SCell) belonging to a different TA group than the PCell, the current 3GPP assumption is that network-initiated random access may be used to obtain initial TA for this SCell (and for the TA group the SCell belongs to). But the reference point for the timing advance has not yet been decided in 3GPP RAN2.

Now it will be explained how PCells and SCells are configured, particularly using Medium Access Control (MAC). In LTE Rel-8/9/10, the eNB and the UE use MAC Control Elements (CE) to exchange information such as buffer status reports, power headroom reports, and others. A list of MAC CEs is provided in section 6.1.3 of 3GPP TS 36.321, "Evolved Universal Terrestrial Radio Access (E-UTRA), Medium Access Control (MAC) protocol specification".

With the introduction of carrier aggregation and the concept of SCells in Rel-10, additional resources maybe configured/de-configured and activated/deactivated on a per need basis. The activation/deactivation procedure is described in detail in section 5.13 of 3GPP TS 36.321, "Evolved Universal Terrestrial Radio Access (E-UTRA), Medium Access Control (MAC) protocol specification.", version 10.5.0. Each Serving Cell is configured with a Cell Index, which is an identifier or cell index which is unique among all serving cells configured for this UE. The PCell always has Cell Index o, and an SCell can have a integer cell index of 1 to 7. Each SCell also has a SCellIndex which equals to the SCell's Cell Index.

MAC CEs are used for activation and deactivation of SCells. The Rel-10 Activation/Deactivation MAC CE is defined in section 6.1.3.8 of 3GPP TS 36.321, "Evolved Universal Terrestrial Radio Access (E-UTRA), Medium Access Control (MAC) protocol specification.", version 10.5.0. The Activation/Deactivation MAC CE includes an octet containing seven C-fields and one R-field. Each C-field corresponds to a specific SCellIndex and indicates whether the specific SCell is activated or deactivated. The UE ignores all C-fields associated with Cell indices not being configured. The Activation/Deactivation MAC CE always indicates the activation status of all configured SCells, meaning that if the eNB (Evolved Node B) wants to activate one SCell, it has to include all configured SCells, setting them to activated or deactivated even if their status has not changed.

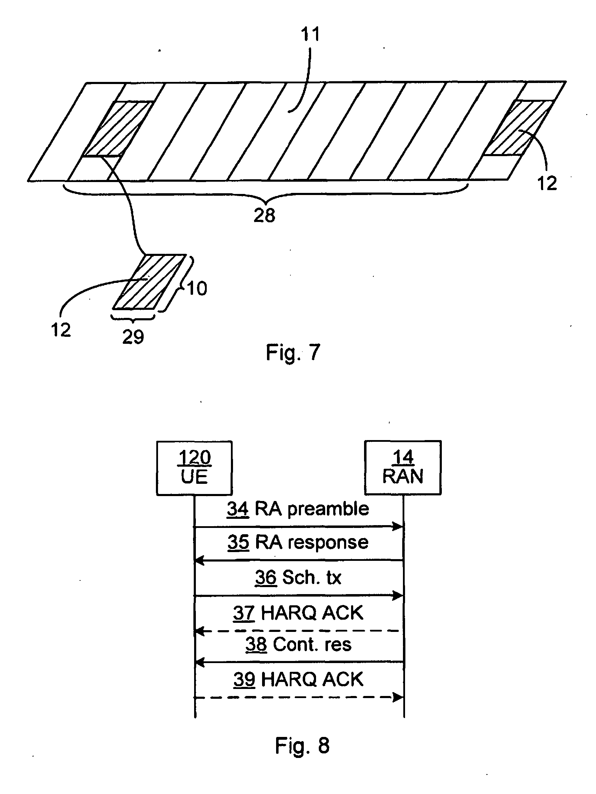

Now the random access procedure in LTE will be described. In LTE, as in any communication system, a mobile terminal may need to contact the network (via the eNB) without having a dedicated resource in the Uplink (from UE to base station). To handle this, a random access procedure is available where a UE that does not have a dedicated UL resource may transmit a signal to the base station. The first message of this procedure is typically transmitted on a special resource reserved for random access, a physical random access channel (PRACH). This channel can for instance be limited in time and/or frequency (as in LTE), as seen in Fig 7. Here, the random access preamble 12 is limited in time to 1 ms (one subframe) and in resource blocks 10 to six resource blocks. The transmission of the random access preamble is repeated in each frame 28. The rest of the available uplink resources 11 can be used for data transmission.

The resources available for PRACH transmission is provided to the terminals as part of the broadcasted system information (or as part of dedicated RRC signaling in case of e.g. handover).

In LTE, the random access procedure can be used for a number of different reasons. Among these reasons are: initial access (for UEs in the LTE_IDLE or LTE_DETACHED states), incoming handover, resynchronization of the UL, scheduling request (for a UE that is not allocated any other resource for contacting the base station), and positioning.

Fig 8 is a sequence diagram illustrating signalling over the air interface for a contention based random access procedure in LTE. The UE 120 starts the random access procedure by randomly selecting one of the preambles available for contention-based random access. The UE 120 then transmits 34 the selected random access preamble on the physical random access channel (PRACH) to eNode B in RAN 14.

The RAN 14 acknowledges any preamble it detects by transmitting 35 a random access response (MSG2) including an initial grant to be used on the uplink shared channel, a Temporary C-Radio Network Temporary Identifier(s) (TC-RNTI), and a time advance (TA) update based on the timing offset of the preamble measured by the eNB on the PRACH. The MSG2 is transmitted in the DL to the UE 120 and its corresponding PDCCH (Physical Downlink Control Channel) message CRC (Cyclic Redundancy Check) is scrambled with the Random Access-Radio Network Temporary Identifier(s) (RA-RNTI).

When receiving the response the UE 120 uses the grant to transmit a message (MSG3) that in part is used to trigger the establishment of radio resource control (RRC) and in part to uniquely identify the UE 120 on the common channels of the cell. The timing advance command provided in the random access response is applied in the UL transmission 36 in MSG3, for which the RAN 14 sends a HARQ ACK 37, providing that the message is successfully decoded. The eNB can change the resources blocks that are assigned for a MSG3 re-transmission by sending an UL grant whose CRC is scrambled with the TC-RNTI.

A MSG4 which is then contention resolution 38 has its PDCCH CRC scrambled with the C-RNTI if the UE 120 previously has a C-RNTI assigned, and sent from the RAN 14 to the UE 120. The UE 120 responds with a HARQ ACK 39, providing that the message is successfully decoded. If the UE 120 does not have a C-RNTI previously assigned the PDCCH CRC is scrambled with the TC-RNTI.

The procedure ends with RAN ₁₄ solving any preamble contention that may have occurred for the case that multiple UEs transmitted the same preamble at the same time. This can occur since each UE randomly selects when to transmit and which preamble to use. If multiple UEs select the same preamble for the transmission on RACH, there will be contention between these UEs that needs to be resolved through the contention resolution message (MSG4).

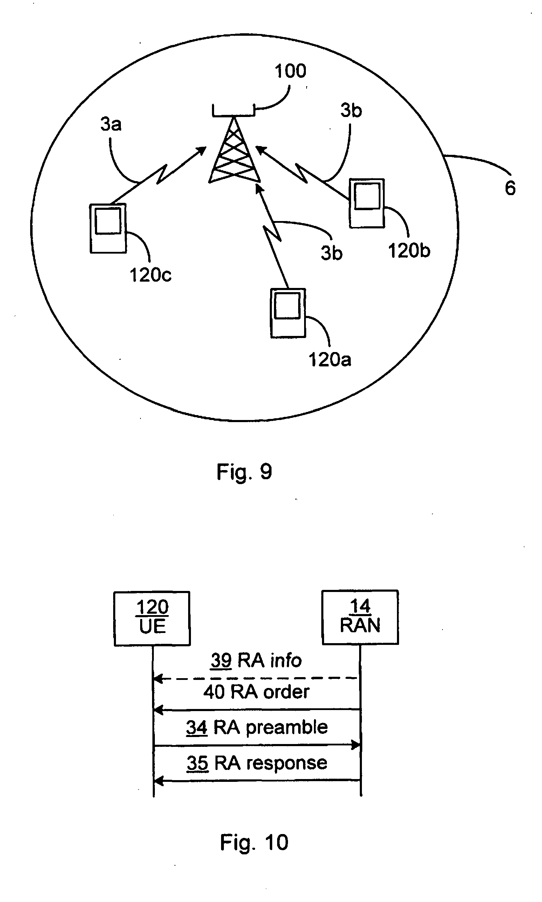

The case when contention occurs is illustrated in Fig 9, where two UEs 120a-b transmit the same preamble 3b, p5, at the same time. A third UE 120c also transmits at the same RACH, but since it transmits with a different preamble 3a, p1, there is no contention between this UE and the other two UEs.

Fig 10 is a sequence diagram illustrating signalling over the air interface for a contention free random access procedure in LTE. The UE can thus also perform non-contention based random access. A non-contention based random access or contention free random access can, e.g., be initiated by the eNB in the RAN 14 to get the UE 120 to achieve synchronization in UL. The eNB initiates a non-contention based random access either by sending a PDCCH order or indicating it in an RRC message. The later of the two is used in case of handover (HO).

The eNB (part of the RAN 14) can also order the UE through a PDCCH message 40 to perform a contention based random access. Prior to that, RA (Random Access) info 39 has been sent comprising system information for random access. As a response to the RA order 40, the UE 120 sends an RA preamble according to the RA order 40. Similar to the contention based random access the MSG2 35 is transmitted in the DL to the UE and its corresponding PDCCH message CRC is scrambled with the RA-RNTI. The UE 120 considers the contention resolution successfully completed after it has received MSG2 successfully. Although completed, the UE still sends MSG3.

For the contention free random access as for the contention based random access, the MSG2 of the RA response 35 contains a timing advance value. This enables the eNB to set the initial/updated timing according to the UEs transmitted preamble.

In LTE in Rel-10, the random access procedure is limited to the primary cell only. This means that the UE can only send a preamble on the primary cell. Further, MSG2 and MSG3 are only received and transmitted on the primary cell. MSG4 can, in Rel-10, be transmitted on any DL cell.

In LTE Rel-11, the random access procedure maybe supported also on secondary cells (SCells), at least for the UEs supporting Rel-11 carrier aggregation. But in this case, only network-initiated random access on secondary cells (SCells) is assumed.

As explained above, a timing advance (TA) value may be used by the UE to offset its UL transmission timing relative to a reference. At random access, the UE assumes an initial TA value of zero. The eNB measures the time misalignment of a desired UL timing in the cell and the actual UL timing of the preamble transmitted by the UE in the random access. The eNB then creates an initial TA command (TAC) that informs the UE how much to advance its UL transmission.

After the random access is successfully completed, the UE initiates UL transmission on a cell "i" at a time Tᵢ before it receives a DL subframe start on cell i. The time Tᵢ is deduced from the TA-value received from the eNB for cell i. When receiving these subsequent UL transmissions from the UE in cell i, the eNB continues to measure the time misalignment of a desired UL timing for this cell and the actual UL timing from the UE on this cell. If the measured time misalignment exceeds a certain value, then the eNB creates a TA command that contains a delta update for the timing advance value previously provided to the UE, which is then sent to the UE. The UE then updates its timing advance timer value for cell i using that delta.

In LTE, the initial TA value is an 11-bit value sent in the random access response message. This initial TA value conveys to the UE how much the UL transmission on a cell should be advanced in relation to a reference. In Rel-10 this reference is carried by the DL of the PCell. Subsequent TA values which are delta updates of the current TA value are carried in a 6-bit value and sent in a MAC control element. Accordingly, the UE must receive initial TA value in order for subsequent TA delta updates to be meaningful. Stated differently, the UE must have initiated a random access procedure and received an initial TA value in order for subsequent TA update commands to be meaningful.

In LTE Rel-11, a timing advance grouping concept is introduced where it is possible to group UE serving cells in to TA groups depending on their TA values. Each TA group has an associated TA timer which controls the validity of the TA value. As long as the TA timer is running, the TA value is considered valid, and the UE is considered UL- synchronized on the serving cells associated with the TA value. A TA timer is restarted when the associated TA value is updated. If no TA update is performed for a certain time, the TA timer expires.

An eNB could intentionally avoid sending TA update commands in order for the associated TA timer to expire (for example to stop Sounding Reference Signal (SRS) transmission on associated serving cells). This might be done when only DL communications are intended to be used on the serving cells in a TA group, and UL communications are not needed.

In Rel-10, the TA timer value ranges from 0.5 sec to infinity. It is possible that Rel-11 will also specify the same TA timer value range. In such cases, it may not be time efficient to, for example, stop SRS on a cell or group of cells by stopping sending TA update commands. UL resources should not be used when not needed to decrease battery use in UEs, decrease radio interference, and minimize unnecessary processing time in UEs and in eNBs.

A UE is configured with the capability to remove the TA group association for a serving cell, or alternatively, to assign the serving cell to a new inactive TA group which can not achieve UL synchronization. If the UE elects to do either, then UL resources on the serving cell can be released for other use.

Now various embodiments will be presented, applicable at least in the context explained above.

Release 11 of LTE (Rel-11) supports carrier aggregation of carriers transmitted from different physical locations which means that the UE must maintain multiple TA values. To make things simpler, a TA grouping concept is introduced that allows grouping together cells which have the same propagation delay, and therefore could use the same TA value. For each TA value there is an associated TA timer which controls the validity of the TA value. If the TA timer is running, then the TA value is considered valid. Conversely, if the TA has expired, then the TA value is considered invalid. The TA timer is restarted each time a TA value update is received for the associated TA value. If no TA value updated is received before the TA timer expires, then the TA value is considered invalid, and the UE is not considered UL-synchronized on the associated serving cells.

If the eNB wants a UE to stop transmitting uplink on one or more cells in a certain TA group, the eNB may stop sending TA value updates for the TA value associated with that group. When the TA timer expires, the UE stops transmitting in the uplink, while downlink communications in the cell can continue.

However, waiting for the TA timer to expire is not always optimum or even feasible. Consider an example situation where the shortest TA timer value is 0.5 seconds. This is a relatively long time period, and even longer TA timer values including a possible infinity value exacerbate the delay before the TA timer expires and the UL resources are released for other use.

Accordingly, transmissions in the UL on a cell maybe halted while still maintaining DL transmissions in that cell by removing the TA group assignment for the cell or by assigning the cell to a special TA group, which is an inactive TA group, that does not support UL traffic.

In a non-limiting example, assume that the UE can aggregate up to five cells. In that example case, the largest number of TA groups is five. To address five groups, three bits are needed. Three bits provide eight different values, and therefore, the three unused values may be used for other purposes than assigning a serving cell to one of the five TA groups.

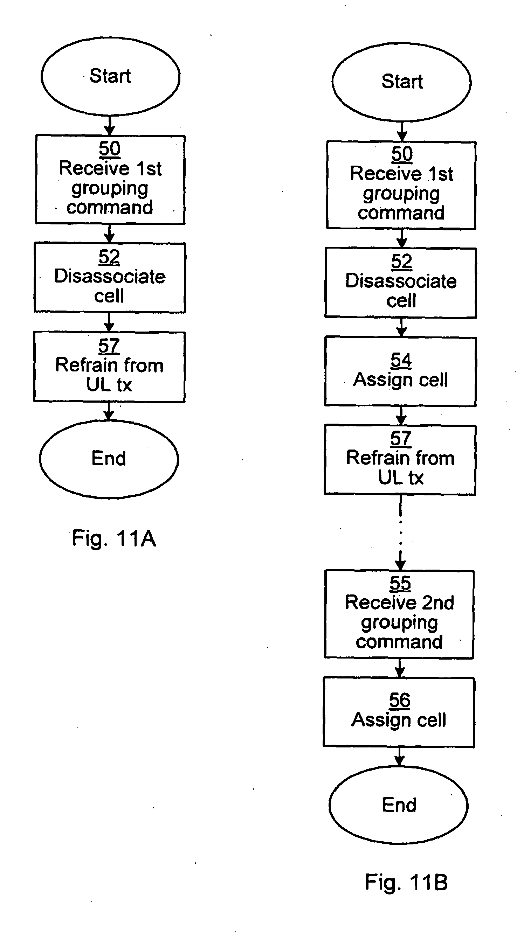

Figs 11A-B are flow charts illustrating methods performed in the UE for inactivating uplink transmissions to an indicated cell.

Starting with Fig 11A, in an initial *receive 1^{st} grouping command* step 50, a grouping command is received. The grouping command comprises the indicated cell and is received from an eNB to assign the indicated cell to an inactive TA group, the inactive TA group indicating the UE to refrain from performing uplink transmissions.

In a *disassociate cell* step 52, the indicated cell is disassociated from a normal TA group. The normal TA group is associated with a TA value. As explained above, TA value indicates when the UE should start uplink transmission before a nominal time given by the timing of a download signal received by the UE.

In a *refrain from UL* tx step 57, the UE refrains from uplink transmission to the indicated cell, as a result of being disassociated from the normal TA group. In one embodiment, indicated cell remains disassociated with any TA group, which prevents the UE from performing any uplink transmissions to the indicated cell.

Fig 11B illustrates another method performed in the UE according to one embodiment. The steps explained with reference to Fig 11A will not be explained again, unless they differ in some way to the steps explained with reference to Fig 11B.

In an optional *assign cell* step 54, the indicated cell is assigned to the inactive TA group. Since the inactive TA group indicates to the UE that it should refrain from performing uplink transmissions, the UE then refrains from performing uplink transmissions to the indicated cell.

In one embodiment, the inactive TA group is part of a set of predetermined inactive TA groups which all indicate to the UE that it should refrain from performing uplink transmissions on a serving cell being part of such a TA group.

In one embodiment, the inactive TA group fails to have a valid TA value and/or fails to have an active TA timer, whereby the UE refrains from UL transmissions on a serving cell being part of such a TA group.

Optionally, after some time, the situation can have changed, whereby the eNB may want the UE to start uplink transmissions to the indicated cell again. In such a situation, the remaining steps are performed.

In a *receive 2^{nd} grouping* command step 55, a second grouping command is received comprising the indicated cell. The second grouping command is received from the eNB and orders the UE to assign the indicated cell to a normal TA group. The normal TA group has a valid TA value.

In a second *assign cell* step 56, the indicated cell is assigned to the normal TA group. Since the normal TA group has a valid TA value, the UE can restart uplink transmissions to the indicated cell.

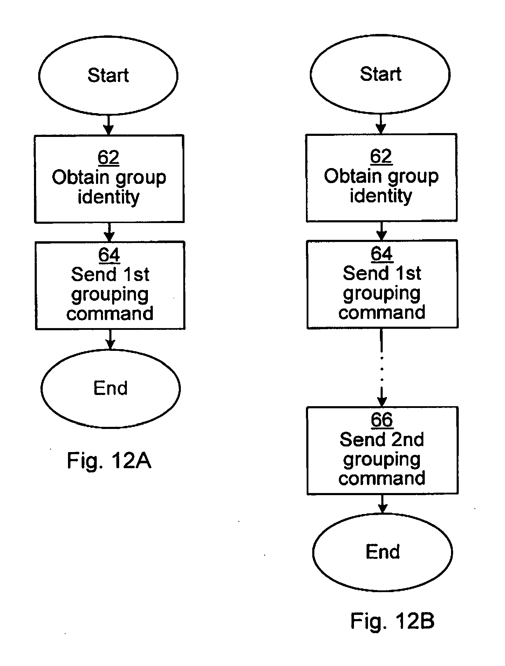

Figs 12A-B are flow charts illustrating methods for inactivating uplink transmissions to an indicated cell performed in an eNB.

Starting with Fig 12A, in an initial *obtain group identity* step 62, an identity of an inactive TA group is obtained. As explained above, the inactive TA group indicates to the UE that it should refrain from performing uplink transmissions on a serving cell being part of such a TA group.

The inactive TA group can be a TA group selected from a predefined set of inactive TA groups which are all predefined to be inactive TA groups, such that the UE refrains from performing uplink transmissions for any cells which belong to such a TA group.

Alternatively, the inactive TA group can be selected to be a TA group for which the eNB already knows that its TA timer is currently inactive. In that way, the eNB knows that if the UE moves the indicated cell to such a TA group, uplink transmissions to the indicated cell will not occur.

In a *send 1^{st} grouping command* step, a grouping command comprising the indicated cell is sent to the UE 120, indicating the UE to assign the indicated cell to the inactive TA group.

Fig 12B illustrates another method performed in the eNB according to one embodiment. The steps explained with reference to Fig 12A will not be explained again.

Optionally, after some time, the situation can have changed, whereby the eNB may want the UE to start uplink transmissions to the indicated cell again. In such a situation, the remaining step is performed.

In a *send 2^{nd} grouping* command step 66, a grouping command comprising the indicated cell is sent to the UE, to assign the indicated cell to a normal TA group having a valid TA value. In this way, the UE can restart uplink transmissions to the indicated cell.

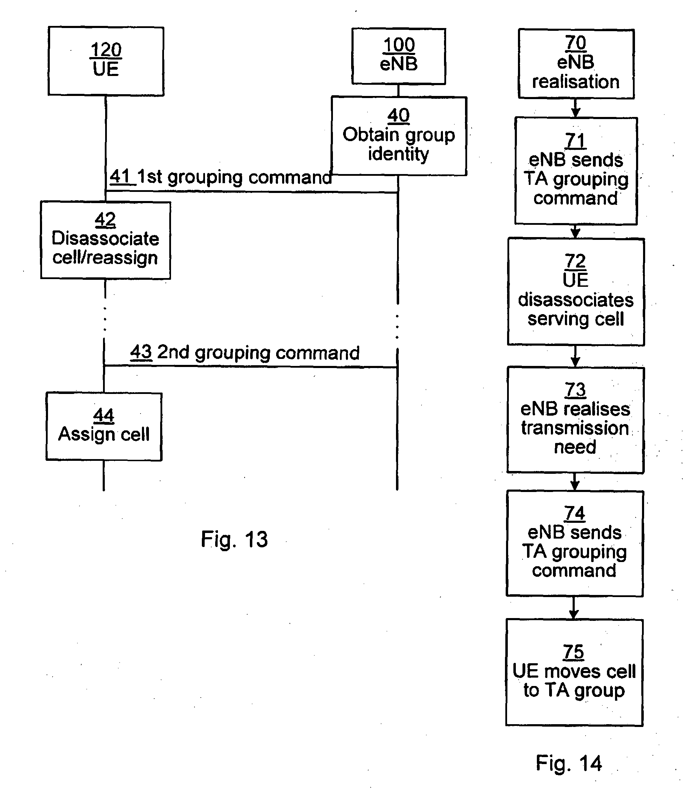

Fig 13 is a sequence diagram illustrating signalling between an eNB and a UE for inactivating uplink transmissions to an indicated cell. The sequence diagram corresponds to a combination of at least parts of Fig 11B, which relates to a method performed in the UE 129, and Fig 12B, which relates to a method performed in the eNB 100.

Initially, the eNB 100 obtains 40 a group identity of an inactive TA group. As explained above, the inactive TA group indicates to the UE that it should refrain from performing uplink transmissions. This corresponds to the *obtain group identity* step 62 of Figs 12A-B.

The eNB 100 then sends a first grouping command 41 comprising the identity of the inactive TA group to the UE 120. This corresponds to the *send first grouping* command step 64 of Figs 12A-B *and receive first grouping command* step 50 of Fig 11A-B.

The UE 120 then performs an action 42 to disassociate and optionally reassign the indicated cell. This corresponds to the *assign cell* step 54 and *refrain from UL tx* step 57 of Figs 11A-B.

Optionally, after some time, the situation can have changed, whereby the eNB 100 may want the UE 120 to start uplink transmissions to the indicated cell again. In such a situation, the remaining part of the sequence diagram of Fig 13 is performed.

The eNB 100 then sends a second grouping command 43 to the UE 120, comprising a reference to a normal, active TA group. This corresponds to the *send 2^{nd} grouping command* step 66 of Fig 12B and receive 2nd grouping command 55 of Fig 11B.

The UE 120 responds to the second grouping command 43 by assigning the cell indicated in the command to the normal, active TA group referred to in the grouping command. At that point, the UE 120 is ready to again perform uplink transmissions to the indicated cell.

Fig 14 below is a flowchart outlining example procedures largely corresponding to the sequence diagram of Fig 13.

In an *eNB realisation* step 70, the eNB realises a shortage of UL resources or that the UL of a serving cell x (indicated cell) is not going to be used for a while.

In an *eNB sends TA grouping command* step 71, the eNB sends, to the UE, a TA grouping command for the serving cell x (indicated cell) with a predefined TA group value which means that the concerned serving cell should be moved to a special TA group (which is equal to an inactive TA group) or removed of its TA group assignment.

In a *UE disassociates serving cells* step 72, upon reception of the TA grouping command for serving cell x, the UE moves the serving cell x to a special TA group or removes its TA group assignment. No UL transmission on the serving cell is possible after that.

In an *eNB realises transmission need* step 73, the eNB later realises that the UE needs to transmit on UL on serving cell x.

In an *eNB sends TA grouping command* step 74, the eNB sends, to the UE, a TA grouping command for a serving cell x with a TA group ID for a normal TA group, in which UL transmission is possible on the serving cell.

In a *UE moves cell to TA group* step 75, upon reception of the TA grouping command, the UE moves the concerned cell to the TA group specified in the TA command for serving cell x and UL transmission is allowed on the serving cell.

In a first, non-limiting, example embodiment, a serving cell's group assignment is removed or switched to a special TA group (being an inactive TA group) to stop UL transmission on the serving cell.

In a second, non-limiting, example embodiment, the TA group assignment is removed for a serving cell by the eNB sending a predefined TA group assignment value or one value out of a predefined set of values.

In a third, non-limiting, example embodiment, a serving cell which due to removal of its TA group assignment, as described in the first embodiment, is currently not able to do UL transmission but has its UL transmission capability re-established by assigning it to a normal TA group.

In a fourth, non-limiting, example embodiment, a serving cell is moved to a new special TA group (inactive TA group) which is not able to support UL transmission, for example by not having a TA value and/or a TA timer, and thereby the UL transmission on the serving cell is stopped.

In a fifth, non-limiting, example embodiment, the fourth embodiment of moving a serving cell to a new special TA group (inactive TA group) is implemented by the eNB sending a predefined TA group assignment value or one value out of a predefined set of TA group assignment values.

In a sixth, non-limiting, example embodiment, a serving cell having been moved to a new special TA group (inactive TA group) which does not support UL transmission, as described in the fourth embodiment, has its UL transmission capability re-established by assigning it to a normal TA group.

In a seventh, non-limiting, example embodiment, a serving cell is moved to a normal TA group where a TA timer is currently not running and thereby the UL transmission on the serving cell is stopped.

Although in the above embodiments, the UL transmissions on the serving cell are stopped, this is not essential. Moreover, UL-related configurations (such as a sounding reference signal (SRS)-configuration) maybe released as well.

The second and fifth embodiments give examples of how the signaling may be carried out, but these are only examples. The actual signaling maybe performed in any suitable fashion.

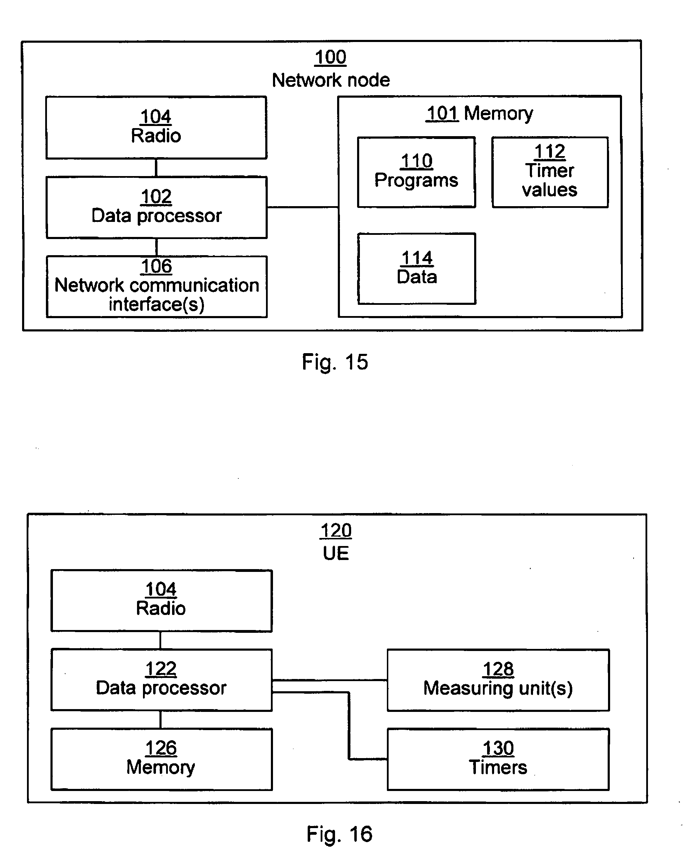

Fig 15 is a function block diagram of a network node 100 that maybe used to implement network-related operations, examples of which are described above. A data processor 102 controls overall operation of the network node. The network node 100 may be a radio network node (some sort of base station or access point) and thus include radio communications circuitry 104. In the LTE examples, this node can correspond to an eNB. The data processor 102 connects to one or more network communication interface(s) 106 and to memory 101. The memory 101 includes in program instructions, one or more TA timer values and one or more TA group values 112, and other data 114.

Fig 16 is a function block diagram of a UE node 120 that may be used to implement UE-related operations, examples of which are described above. The UE 120 includes a data processor 122 that controls the overall operation of the UE and is coupled to radio circuitry 124 for making and receiving radio communications, e.g., with a radio access network. The processor 122 is coupled to memory 126 that stores programs and data. Data processor 122 is also coupled to a measuring unit 128 and one or more TA timers 130 which are shown as separate units from the processor 122 but whose functions may be performed by the data processor 122 if desired. The measuring unit 128 makes and/or reports to the network cell and/or other radio-related measurements. The one or more TA timers 130 are used for timing advance uplink transmission decisions and related operations.

In summary, the network, through the eNB, can release UL resources for a UE on a certain cell by the elegant solution of only sending a grouping command. This may be particularly beneficial for example if the UL resources . are scarce and the network needs to free up some resources. The serving cell does not need to be deactivated, thereby avoiding stopping DL transmission on the serving cell. If, for example, the grouping is done by sending a MAC CE which has a low delay, the eNB can change the state of a serving cell in a UE from UL-synchronised (serving cell have an associated TA timer running) to UL-unsynchronised (serving cell does not have an associated TA timer running) very quickly, e.g., in a matter of tenths of milliseconds. In contrast, waiting for a TA timer to expire could take many orders of magnitude longer. The TA timer may even be set in some cases to never expire. Also, the alternative of using dedicated RRC signaling to release the UL resources is not attractive because it uses signaling and processing resources in both the eNB and in the UE; it is also relatively slow (e.g., takes more than 50 ms to complete), and it is inflexible for sudden changes in the requirement for UL resources.

Although the description above contains many specifics, they should not be construed as limiting but as merely providing illustrations of some presently preferred embodiments. The technology fully encompasses other embodiments which may become apparent to those skilled in the art. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for a device or method to address each and every problem sought to be solved by the described technology for it to be encompassed hereby.

## Claims

1. A method, performed in a user equipment, UE, (120) for inactivating uplink transmissions to an indicated cell, the method comprising the steps of:
receiving (50) a grouping command (41) comprising the indicated cell from an evolved Node B, eNB, (100) to assign the indicated cell to an inactive timing advance, TA, group, the inactive TA group indicating the UE to refrain from performing uplink transmissions;
disassociating (52) the indicated cell from a normal TA group, the normal TA group being associated with a TA value; and
refraining from uplink transmission to the indicated cell.

2. The method according to claim 1, wherein in the step of disassociating (52), the TA value indicates when the UE should start uplink transmission before a nominal time given by the timing of a download signal received by the UE.

3. The method according to claim 1 or 2, further comprising the step of assigning (53) the indicated cell to the inactive TA group.

4. The method according to claim 3, wherein in the step of assigning (53) the indicated cell to the inactive TA group, the inactive TA group is part of a set of predetermined inactive TA groups.

5. The method according to claim 3 or 4, wherein in the step of assigning (53) the indicated cell to the inactive TA group, the inactive TA group fails to have a valid TA value.

6. The method according to any one of claims 3 to 5, wherein in the step of assigning (53) the indicated cell to the inactive TA group, the inactive TA group fails to have an active TA timer.

7. The method according to claim 1 or 2, further comprising letting the indicated cell remain disassociated with any TA group.

8. The method according to any one of the preceding claims, further comprising the steps of:
receiving (55) a grouping command (46) comprising the indicated cell from the eNB (100), to assign the indicated cell to a normal TA group having a valid TA value; and
assigning (56) the indicated cell to the normal TA group.

9. A user equipment (120) for inactivating uplink transmissions comprising:
a data processor (122); and
a memory (126) storing program instructions that, when executed, causes the UE (120) to:
receive a grouping command (41) comprising the indicated cell from an evolved Node B, eNB, (100) to assign the indicated cell to an inactive timing advance, TA, group, the inactive TA group being predefined to indicate refraining from performing uplink transmissions;
disassociate the indicated cell from a normal TA group, the normal TA group being associated with a TA value; and
refrain from uplink transmission to the indicated cell.

10. A method, performed in an evolved Node B, eNB, (100) for inactivating uplink transmissions to an indicated cell, the method comprising the steps of:
obtaining (62) an identity of an inactive timing advance, TA, group, the inactive TA group indicating to a user equipment, UE, (120) to refrain from performing uplink transmissions; and
sending (64) a grouping command comprising the indicated cell to the UE, (120) to assign the indicated cell to the inactive TA group.

11. The method according to claim 10, wherein the step of obtaining (62) the identity of the inactive TA group comprises obtaining the identity of a TA group being part of a predefined set of inactive TA groups.

12. The method according to claim 10, wherein the step of obtaining (62) the identity of the inactive TA group comprises obtaining the identity of a TA group for which an associated TA timer currently is inactive.

13. The method according to any one of claims 10 to 11, further comprising the step of:
sending (66) a grouping command (46) comprising the indicated cell to the UE (120), to assign the indicated cell to a normal TA group having a valid TA value.

14. An evolved Node B, eNB, (100) comprising:
a data processor (102); and
a memory (101) storing program instructions (110) that, when executed, causes the evolved Node B (100) to:
obtain an identity of an inactive timing advance, TA, group, the inactive TA group indicating to a user equipment, UE, (120) to refrain from performing uplink transmissions; and
send a grouping command comprising the indicated cell to the UE, (120) to assign the indicated cell to the inactive TA group.

## Patentansprüche

1. Verfahren, das in einem Benutzergerät, UE, (120) zum Inaktivieren von Uplink-Übertragungen an eine angezeigte Zelle ausgeführt wird, wobei das Verfahren die folgenden Schritte umfasst:
Empfangen (50) eines die angezeigte Zelle umfassenden Gruppierungsbefehls (41) von einem evolvierten Node B, eNB, (100), die angezeigte Zelle einer inaktiven TA(Timing-Vorlauf)-Gruppe zuzuweisen, wobei die inaktive TA-Gruppe dem UE anzeigt, das Ausführen von Uplink-Übertragungen zu unterlassen;
Dissoziieren (52) der angezeigten Zelle von einer normalen TA-Gruppe, wobei die normale TA-Gruppe mit einem TA-Wert assoziiert ist; und
Unterlassen von Uplink-Übertragung an die angezeigte Zelle.

2. Verfahren nach Anspruch 1, worin im Schritt des Dissoziieren (52) der TA-Wert anzeigt, wann das UE Uplink-Übertragung vor einer nominalen Zeit starten sollte, die durch das Timing eines vom UE empfangenen Download-Signals gegeben wird.

3. Verfahren nach Anspruch 1 oder 2, außerdem den Schritt umfassend, die angezeigte Zelle der inaktiven TA-Gruppe zuzuweisen (53).

4. Verfahren nach Anspruch 3, worin im Schritt des Zuweisens (53) der angezeigten Zelle an die inaktive TA-Gruppe die inaktive TA-Gruppe Teil eines Satzes von vorgegebenen inaktiven TA-Gruppen ist.

5. Verfahren nach Anspruch 3 oder 4, worin die inaktive TA-Gruppe im Schritt des Zuweisens (53) der angezeigten Zelle an die inaktive TA-Gruppe keinen gültigen TA-Wert hat.

6. Verfahren nach einem der Ansprüche 3 bis 5, worin die inaktive TA-Gruppe im Schritt des Zuweisens (53) der angezeigten Zelle an die inaktive TA-Gruppe keinen aktiven TA-Timer hat.

7. Verfahren nach Anspruch 1 oder 2, außerdem umfassend, dass die angezeigte Zelle von jeder TA-Gruppe weiterhin dissoziiert bleibt.

8. Verfahren nach einem der vorhergehenden Ansprüche, außerdem die folgenden Schritte umfassend:
Empfangen (55) eines die angezeigte Zelle umfassenden Gruppierungsbefehls (46) vom eNB (100), die angezeigte Zelle einer normalen TA-Gruppe mit einem gültigen TA-Wert zuzuweisen; und
Zuweisen (56) der angezeigten Zelle an die normale TA-Gruppe.

9. Benutzergerät (120) zum Inaktivieren von Uplink-Übertragungen, Folgendes umfassend:
einen Datenprozessor (122); und
einen Speicher (126), der Programmanweisungen speichert, die, wenn sie ausgeführt werden, das UE (120) zu Folgendem veranlassen:
Empfangen eines die angezeigte Zelle umfassenden Gruppierungsbefehls (41) von einem evolvierten Node B, eNB, (100), die angezeigte Zelle einer inaktiven TA(Timing-Vorlauf)-Gruppe zuzuweisen, wobei die inaktive TA-Gruppe zum Anzeigen vordefiniert ist, das Ausführung von Uplink-Übertragungen zu unterlassen;
Dissoziieren der angezeigten Zelle von einer normalen TA-Gruppe, wobei die normale TA-Gruppe mit einem TA-Wert assoziiert ist; und
Unterlassen von Uplink-Übertragung an die angezeigte Zelle.

10. Verfahren, in einem evolvierten Node B, eNB, (100) ausgeführt, um Uplink-Übertragungen an die angezeigte Zelle zu inaktivieren, wobei das Verfahren die folgenden Schritte umfasst:
Ermitteln (62) einer Identität einer inaktiven TA(Timing-Vorlauf)-Gruppe, wobei die inaktive TA-Gruppe einem Benutzergerät, UE, (120) anzeigt, das Ausführen von Uplink-Übertragungen zu unterlassen; und
Senden (64) eines die angezeigte Zelle umfassenden Gruppierungsbefehls an das UE, (120), die angezeigte Zelle der inaktiven TA-Gruppe zuzuweisen.

11. Verfahren nach Anspruch 10, worin der Schritt des Ermittelns (62) der Identität der inaktiven TA-Gruppe das Ermitteln der Identität einer TA-Gruppe umfasst, die Teil eines vordefinierten Satzes von inaktiven TA-Gruppen ist.

12. Verfahren nach Anspruch 10, worin der Schritt des Ermittelns (62) der Identität der inaktiven TA-Gruppe das Ermitteln der Identität einer TA-Gruppe umfasst, für die ein assoziierte TA-Timer gegenwärtig inaktiv ist.

13. Verfahren nach einem der Ansprüche 10 bis 11, außerdem den folgenden Schritt umfassend:
Senden (66) eines die angezeigte Zelle umfassenden Gruppierungsbefehls (46) an das UE (120), die angezeigte Zelle einer normalen TA-Gruppe mit einem gültigen TA-Wert zuzuweisen.

14. Evolvierter Node B, eNB, (100), Folgendes umfassend:
einen Datenprozessor (102); und
einen Speicher (101), der Programmanweisungen (110) speichert, die, wenn sie ausgeführt werden, den evolvierten Node B (100) zu Folgendem veranlassen:
Ermitteln einer Identität einer inaktiven TA(Timing-Vorlauf)-Gruppe, wobei die inaktive TA-Gruppe einem Benutzergerät, UE, (120) anzeigt, das Ausführen von Uplink-Übertragungen zu unterlassen; und
Senden eines die angezeigte Zelle umfassenden Gruppierungsbefehls an das UE, (120), die angezeigte Zelle der inaktiven TA-Gruppe zuzuweisen.

## Revendications

1. Procédé, effectué dans un équipement d'utilisateur, UE, (120) pour inactiver les transmissions de liaison montante vers une cellule indiquée, le procédé comprenant les étapes :
de réception (50) d'une commande de groupement (41) comprenant la cellule indiquée d'un noeud B évolué, eNB, (100) pour attribuer la cellule indiquée à un groupe d'avance de synchronisation inactif, TA, le groupe de TA inactif indiquant à l'UE de s'abstenir d'effectuer des transmissions de liaison montante ;
de désassociation (52) de la cellule indiquée d'un groupe de TA normal, le groupe de TA normal étant associé à une valeur de TA ; et
d'abstention de transmission de liaison montante vers la cellule indiquée.

2. Procédé selon la revendication 1, dans lequel, à l'étape de désassociation (52), la valeur de TA indique quand l'UE devrait débuter une transmission de liaison montante avant un temps nominal donné par la synchronisation d'un signal de téléchargement reçu par l'UE.

3. Procédé selon la revendication 1 ou 2, comprenant en outre l'étape d'attribution (53) de la cellule indiquée au groupe de TA inactif.

4. Procédé selon la revendication 3, dans lequel, à l'étape d'attribution (53) de la cellule indiquée au groupe de TA inactif, le groupe de TA inactif fait partie d'un ensemble de groupes de TA inactifs prédéterminés.

5. Procédé selon la revendication 3 ou 4, dans lequel, à l'étape d'attribution (53) de la cellule indiquée au groupe de TA inactif, le groupe de TA inactif n'arrive pas à avoir une valeur de TA valide.

6. Procédé selon l'une quelconque des revendications 3 à 5, dans lequel, à l'étape d'attribution (53) de la cellule indiquée au groupe de TA inactif, le groupe de TA inactif n'arrive pas à avoir un registre d'horloge de TA actif.

7. Procédé selon la revendication 1 ou 2, comprenant en outre le fait de laisser la cellule indiquée rester dissociée de tout groupe de TA.

8. Procédé selon l'une quelconque des revendications précédentes, comprenant en outre les étapes :
de réception (55) d'une commande de groupement (46) comprenant la cellule indiquée de l'eNB (100) pour attribuer la cellule indiquée à un groupe de TA normal ayant une valeur de TA valide ; et
d'attribution (56) de la cellule indiquée au groupe de TA normal.

9. Equipement d'utilisateur (120) pour inactiver des transmissions de liaison montante comprenant :
un processeur de données (122) ; et
une mémoire (126) mémorisant des instructions de programme qui, lorsqu'elles sont exécutées, amènent l'UE (120) à :
recevoir une commande de groupement (41) comprenant la cellule indiquée d'un noeud B évolué, eNB, (100) pour attribuer la cellule indiquée à un groupe d'avance de synchronisation inactif, TA, le groupe de TA inactif étant prédéfini pour indiquer de s'abstenir d'effectuer des transmissions de liaison montante ;
désassocier la cellule indiquée d'un groupe de TA normal, le groupe de TA normal étant associé à une valeur de TA ; et
s'abstenir d'une transmission de liaison montante vers la cellule indiquée.

10. Procédé, effectué dans un noeud B évolué, eNB, (100) pour inactiver les transmissions de liaison montante vers une cellule indiquée, le procédé comprenant les étapes :
d'obtention (62) d'une identité d'un groupe d'avance de synchronisation inactif, TA, le groupe de TA inactif indiquant à un équipement d'utilisateur, UE, (120) de s'abstenir d'effectuer des transmissions de liaison montante ; et
d'envoi (64) d'une commande de groupement comprenant la cellule indiquée à l'UE (120) pour attribuer la cellule indiquée au groupe de TA inactif.

11. Procédé selon la revendication 10, dans lequel l'étape d'obtention (62) de l'identité du groupe de TA inactif comprend l'obtention de l'identité d'un groupe de TA qui fait partie d'un ensemble prédéfini de groupes de TA inactifs.

12. Procédé selon la revendication 10, dans lequel l'étape d'obtention (62) de l'identité du groupe de TA inactif comprend l'obtention de l'identité d'un groupe de TA pour lequel un registre d'horloge de TA associé est actuellement inactif.

13. Procédé selon l'une quelconque des revendications 10 à 11, comprenant en outre l'étape :
d'envoi (66) d'une commande de groupement (46) comprenant la cellule indiquée à l'UE (120) pour attribuer la cellule indiquée à un groupe de TA normal ayant une valeur de TA valide.

14. Noeud B évolué, eNB, (100) comprenant :
un processeur de données (102) ; et
une mémoire (101) mémorisant des instructions de programme (110) qui, lorsqu'elles sont exécutées, amènent le noeud B évolué (100) à :
obtenir une identité d'un groupe d'avance de synchronisation inactif, TA, le groupe de TA inactif indiquant à un équipement d'utilisateur, UE, (120) de s'abstenir d'effectuer des transmissions de liaison montante ; et
envoyer une commande de groupement comprenant la cellule indiquée à l'UE (120) pour attribuer la cellule indiquée au groupe de TA inactif.
